# EUROPEAN PATENT APPLICATION

(11) **EP 4 421 043 A1**
(43) Date of publication of application: **28.08.2024**
(21) Application number: 23158367.5
(22) Date of filing: 23.02.2023
(51) Int. Cl.: C02F 1/461, C02F 1/467, C02F 101/30, C02F 101/34

(54) **A HYBRID ELECTROCHEMICAL FILTRATION CELL FOR WATER TREATMENT AND A PROCESS FOR WATER TREATMENT USING SAID CELL**

(71) Applicant: Univerza v Mariboru, 2000 Maribor (SI); IOS, Institut za okoljevarstvo in senzorje, d.o.o., 2000 Maribor (SI)
(72) Inventor: Hadela, Ajra, 2327 Race (SI); Kosak, Aljosa, 3000 Celje (SI); Lobnik, Aleksandra, 2311 Hoce (SI); Dimitrusev, Nena, 2000 Maribor (SI); Klasinc, Aljaz, 2000 Maribor (SI)
(74) Representative: Patentni Biro AF d.o.o.

(57) **Abstract**

The present invention belongs to the field of devices and processes for the treatment of water contaminated with organic and/or microbiological pollutants, more particularly the invention belongs to the field of electrochemical, filtration and disinfection methods. The invention relates to an adjustable hybrid electrochemical filtration cell for water treatment, particularly for removing, degrading and disinfection of water polluted with organic matter and/or microorganisms. The essence of the invention is that the cell comprises at least one electrode made from an antimicrobial nanocomposite porous material, which comprises a porous substrate with a coating made of antimicrobial and electrically conducting nanomaterial

## Description

### Field of the invention

The present invention belongs to the field of devices and processes for the treatment of water contaminated with organic and/or microbiological pollutants, more particularly the invention belongs to the field of electrochemical, filtration and disinfection methods. The invention relates to an adjustable hybrid electrochemical filtration cell for water treatment, particularly for removal, degradation and disinfection of waters polluted with organic matter and/or microorganisms.

### Background of the invention and the technical problem

Presently known conventional and widely used methods for removal of microbiological and organic pollutants from water involve mechanical, physical and chemical treatment, such as adsorption, oxidation, membrane filtration, aeration, coagulation, flocculation, sedimentation, application of chlorine and similar. These methods have several disadvantages and often perform insufficiently. Natural water sources as well as wastewaters exhibit higher pollution than in the past, wherein novel pollutants emerge which are more challenging to remove or degrade. Therefore, novel methods for water treatment are being developed, such as novel oxidation methods, electrochemical methods including electrochemical filtration, electrochemical coagulation and electrochemical flocculation or combinations of various technologies, which are simpler, more sustainable, and more efficient.

Electrochemical filtration, as an unconventional electrochemical method of water purification, has great potential, especially where conventional water purification methods and infrastructure do not have the ability to adequately treat waste or polluted water or to prepare drinking water. Electrochemical filtration, which is a combination of classical filtration and electrochemical water purification processes, combines the advantages of each method and at the same time reduces their limitations.

In electrochemical filtration technology, the type of material and structure of the electrically conductive nanocomposite filtration material is of key importance, because it simultaneously serves as a filter material and an electrode, which with the help of an external source of direct electric voltage enables electrochemical or redox reactions next to or on the surface of the filtration material, such as reduction and oxidation of pollutants, which reduces the clogging of the pores of the filtration material and increases its performance in terms of flow retention and retention capacity, thereby extending its life.

The technical problem, which is solved by the present invention, is the design and development of a hybrid electrochemical filtration cell, improved electrode materials and a water treatment process using said cell that will allow efficient and fast adjustment of the cell and thus the process with regards to the pollutant detected in the water to be treated.

### Prior art

Patent application CA2632788 relates to an electrochemical process for the degradation of toxic organic molecules in solution. This process includes the treatment of organic toxins containing solutions in an electrolytic cell having dimensionally stable anodes (DSA) with high oxygen overvoltage. The anodes are made of titanium coated with iridium oxide (IrO₂), ruthenium oxide (RuO₂) or tin oxide (SnO₂). The solution is treated with a current density ranging between 3.0 to 23 mA/cm² and for a period between 10 to 200 min. This process can be used for the degradation of different organic molecules including one type or a mixture of polycyclic aromatic hydrocarbons (PAHs), chlorinated compounds, pesticides, endocrine disruptors, oils and greases, petroleum hydrocarbons, PCBs, PCDD/F or other types of organic compounds. Patent application CA1327767 discloses a process for electrochemically degrading organic contaminants in groundwater comprises embedding a grid work of rods in the ground in the region where groundwater flows which contains the organic contaminants. A voltage is applied to the plurality of spaced-apart oppositely charged rods to degrade electrochemically such organic contaminants in the groundwater. Sufficient voltage is applied across the plurality of oppositely charged rods to achieve such electrochemical degradation. The process provides an effective relatively inexpensive form of minimizing or eliminating organic contaminants in groundwater, particularly contaminants such as phenols and trichloroethylene.

Patent application CA2027374 describes a method for the electrochemical degradation of chlorophenols. The chlorinated phenols are adsorbed onto activated carbon, e.g., graphite felt, electrode and are simultaneously subjected to electrochemically mediated oxidation in the presence of chloride ions and/or radicals. This results in the destruction of the halogenated compounds and the simultaneous rejuvenation of the electrode surface. Powerful oxidizing agents are generated at the anode and these are capable of decomposing chlorinated phenols into CO₂ and other dechlorinated organic components.

Patent EP0027745 discloses a process for electrochemical degradation of at least one persistent harmful or potentially harmful organic compound. The process comprises anodically oxidizing or cathodically reducing the organic compound or compounds (i.e. mixture of compounds) in an aqueous liquid system in which the compound is at least partially soluble. One or more unstable cationic radicals are formed which react with a reactive component in the liquid system which may be at least partly its solvent component to form a product or products having a lower oxidation potential in the case of anodic oxidation or a lower reduction potential in the case of cathodic reduction than that of the parent compound or compounds subjected to the electrochemical degradation.

Patent US7431820 relates to electrochemical cells including a first working electrode, a first counter electrode, a second working electrode, and a second counter electrode, wherein the electrodes are spaced so that reaction products from the first counter electrode arrive at the first working electrode, and reaction products from the first and second counter electrodes do not reach the second working electrode. Also provided is a method of using such electrochemical cells for determining the concentration of a reduced or oxidized form of a redox species with greater accuracy than can be obtained using an electrochemical cell having a single working and counter electrode.

Patent EP1829139 discloses an organic/inorganic composite porous separator comprising: (a) a polyolefin-based separator substrate; and (b) an active layer formed by coating at least one region selected from the group consisting of a surface of the substrate and a part of pores present in the substrate with a mixture of inorganic particles and a binder polymer, wherein the inorganic particles in the active layer are interconnected among themselves and are fixed by the binder polymer, and interstitial volumes among the inorganic particles form a pore structure.

Patent application WO2020068872 relates to a system and method for oxidizing organic molecules as an oxygen-atom source using an electrochemical process. The method uses renewable electricity to convert a substrate into an oxidized substrate at room temperature and ambient pressure so that water can be used as a source of oxygen atoms. This method of epoxidizing olefins uses water as a source of oxygen atoms to produce epoxides and hydrogen gas. The reaction can be carried out in electrochemical cells under ambient conditions in a non-aqueous solvent. The reaction is catalyzed by manganese oxide nanoparticles at the anode. The method works at relatively high current densities and is efficient.

Patent application WO9212931 describes an apparatus and a method for the direct oxidation of organic material such as organic wastes. The apparatus comprises an electro-cell divided by an aluminum frit barrier into an anode compartment with a carbon felt anode, a cathode compartment having a platinum cathode, and a strongly oxidizing electrolyte. By applying a 2.5 to 3.5 V potential across the anode and cathode, organic materials can be oxidized to carbon dioxide, carbon monoxide, water and inorganic acids in the absence of an electron transfer agent. The absence of the agent removes a potential source of hazardous waste and simplifies the operation of the electro-cell. It also enables the electro-cell to be used in-line in a laboratory or industrial process to eliminate organic waste at the time of generation and thus obviate the need to store it for disposal.

### Description of the solution to the technical problem

The technical problem is solved as defined in the appended claims, wherein dependent claims define preferred embodiment. The essence of the invention is that the hybrid electrochemical filtration cell comprises at least one antimicrobial nanocomposite porous filter, which is made from a porous substrate with a coating made of antimicrobial and electrically conducting nanomaterials. Thus, simultaneous filtration, disinfection and electrochemical treatment of water are enabled.

The hybrid electrochemical filtration cell according to the invention comprises:
- a two-part housing made from a non-conductive material, preferably acrylic glass or any other electrically insulating material, wherein said parts of the housing are installed and fixed together with fixation means, preferably four screws,
- a space inside the housing arranged to receive:
   ∘ two electrodes one functioning as an anode and the other as a cathode, said electrodes being connected with wires, which are connectable to an outer source of voltage,
   ∘ at least one distancing element (spacer) arranged to be placed between said electrodes to define the distance between the electrodes and to prevent short circuits, wherein each distancing element is made from a non-conductive material,
- at least one suitable seal to seal the interior of the housing,
- an inlet for leading water to be treated into the interior of the housing,
- an outlet for leading the treated water from the interior of the housing,
- a pump for pumping water into the cell and optionally at least one valve for controlling flow through the cell.

The cell may be shaped as a cylinder or a cuboid, preferably flat. The cell may function as a cross-flow or dead-end treatment device. In the latter, water to be treated is poured into the cell and left for the defined treatment time. In the cross-flow embodiment, the water is led into the cell with the pump at a particular flow that allows treatment. Said pump affects the flow and the treatment time in a sense of the residence time of contaminants at the electrode surface. Lower flows enable longer residence times that prolong the time for electrochemical reactions. Preferably, the pump is peristaltic and ensures flow in the range from 3 to 100 mL/min. In case the conductivity of the water to be treated is too low, an electrolyte should be added in a sufficient amount.

In a preferred embodiment, the cell is provided with a connected reservoir for the water to be treated, which is connected to the inlet of the cell and/or a second reservoir for the treated water connected to the outlet of the cell.

At least one of the electrodes is antimicrobial and electrically conductive nanocomposite material with a high specific surface, the polarity of which may be changed by the connection of the wires to the outer voltage source. I.e., the anode and cathode may be changed by altering the connection to the voltage source.

Said nanocomposite material may be prepared from synthetic or natural polymeric or ceramic flat porous substrate materials, which are further provided with a thin layer or a filler of a conductive and antimicrobial material. The latter may be applied to the porous material using spray coating, spin coating, dip coating, vacuum filtration or any other suitable method for coating or incorporation of nanomaterials on or into the substrate to prepare nanocomposites. The antimicrobial and electrically conductive layer may be selected in the group of:
- metals, for example silver, copper, gold, etc.,
- metal-oxides or doped metal-oxides, for example zinc oxide, indium tin oxide, etc.,
- organic polymers or doped organic polymers, for example polyaniline, polypyrrole, polyacetylene, etc.),
- carbon-based nanomaterials, for example carbon nanotubes, graphene, etc., or
- combinations thereof.

These materials enable high a specific surface and thus large active surface of the nanocomposite, so the final filter electrode material has a porous structure that allows fluid flow and a sufficiently high surface electrical conductivity that enables function as an electrode as well as antimicrobial properties. The preferred shape of the material is circular to be placed inside the housing space arranged to receive the electrodes, however, any other shape may also be possible.

Preferably, one-dimensional nanomaterials such as rods, tubes or wires, or two-dimensional nanomaterials such as plates are used in the preparation of said nanocomposite material to be used as at least one of the electrodes.

The amount of the nanomaterial filler or coating must be sufficient to reach the percolation threshold to obtain electrical conductivity, which is highly dependent on the size, shape and distribution of the nanoparticles on or through the substrate because the too low amount will not result in electrical conductivity, while the too high amount will result in lowering the stability of prepared nanocomposite, that can consequently lose its dimensional stability and tear/brake during its use as filter material in electrochemical filtration cell, due to water flow. For the incorporation of nanomaterials into the substrate, electrical conductivity is achieved when nanomaterials present 5 - 60 wt. % of the prepared nanocomposite, while for coated nanomaterials the electrical conductivity is achieved when 0.1 - 2 µg of nanomaterial cover 1 cm² of the chosen substrate.

The second, i.e., the counter electrode may be any suitable electrically conductive material, such as nanocomposite material as described above, silver (Ag), copper (Cu) or aluminium (Al). A piece of the above-mentioned nanocomposite can also be used as the counter electrode. In this case, the electrode must be porous, i.e. perforated or a mesh, to allow water flow.

The distance between both electrodes is set with at least one spacer, wherein the spacer is made from a perforated non-conductive material, usually acrylic glass, acrylonitrile butadiene styrene (ABS), polylactic acid (PLA) or polyethylene terephthalate glycol (PETG). The preferred distances are 3.4 and 5.1 mm, wherein others up to 9.0 mm are also possible. To achieve a larger distance, several spacers are used, as the distance affects the current density, overall resistivity of the system and the rate of electrochemical reactions. Perforation, i.e., size and the number of pores, of the spacer has to allow the desired water to flow through the cell. Perforation may be achieved in any suitable manner; wherein usual perforation is in the range from 25 to 70% of the surface. In a preferred embodiment, perforation is achieved with the design of the holes with the 3D printing technique for ABS, PLA or PET-G material, or by drilling the holes in the acrylic glass plate. Higher perforation has lesser influence on water flow, whereas the remaining surface can present from 30 % up to 75 % of the surface of the spacer, as long as it retains its structure and function as a spacer. The distance and the number of spacers between both electrodes further ensure that the electrodes do not move during cell operation and water flow.

The process for treatment of water using the above-described hybrid electrochemical cell according to the invention comprises the following steps:
- analysis of the water to be treated to determine the pollutants to be removed or degraded,
- preparation of the nanocomposite material to be used as at least one electrode,
- selecting the material for the counter electrode and choosing process parameters, i.e. anode, cathode, E, time of treatment, and similar,
- assembling the cell and connecting the inlet with a suitable water source either in a cross-flow setting or a dead-end setting,
- connecting the electrodes with the external voltage source,
- treatment of the water for a specified time or amount of water.

The preferred conditions of the outer electric voltage (U) are in the range from -10 V to +10 V, temperature (T) 20 - 25 °C, water flow (Q) from 1 mL/min to 100 ml/min and conductivity of the medium of at least 500 µS/cm.

Connection to the source of electrical current is achieved with wire contacts between each electrode and the source of electrical current, usually, a direct current generator, which enables the establishment of a constant voltage or electric potential in the range -10.0 V to +10.0 V. In case of negative electric potential on the nanocomposite electrode, it will function as an anode, while in case of positive electric potential, the nanocomposite electrode will function as a cathode. The first setting is better for the direct oxidation of pollutants, while the second setting is more suitable for pollutants that degrade with reduction.

Combinations of various filter materials, counter electrode materials, the distance between electrodes, definition of which electrode is the anode and which cathode, flow velocity and manner of operation (cross-flow, dead-end) enable adaptation of the cell according to the invention to different types of polluted waters, thus ensuring the versatility and efficiency of the invention. Furthermore, the cell may be used as testing equipment which conditions are best for the degradation or removal of novel pollutants or complex pollutants in water.

Both electrodes enable electrochemical filtration due to the oxidation-reduction potential between the active electrode and the counter electrode upon connection to an outer source of electrical current, which is selected based on the selected voltage on each electrode. At the surface of electrodes electrochemical reactions such as reduction, direct oxidation, indirect oxidation, attraction or repulsion of charged compounds and/or microbubble formation occur, which enable degradation and/or removal of pollutants in the water. On and next to the anode (+), i.e. the positively charged high specific surface area of the manufactured electrically conductive and antimicrobial nanocomposite material, direct oxidation of pollutants takes place due to the formation of OH- (hydroxide), OH˙ (hydroxyl radical) and other reactive oxygen compounds, as well as a decrease in the local pH value, the release of oxygen microbubbles and electrostatic repulsion of positively charged pollutants. Direct reduction and indirect oxidation take place on and next to the cathode (-), i.e. the negatively charged high specific surface of the manufactured electrically conductive and antimicrobial nanocomposite material, due to the formation of H₂O₂ (hydrogen peroxide), as well as an increase in the local pH value, the release of hydrogen microbubbles and negative electrostatic repulsion charged pollutants.

The antimicrobial surface of the electrode enables water disinfection by inactivating microorganisms and/or disintegrating their cellular membranes and/or inhibiting of protein synthesis. Different activities in the cell according to the invention enable the removal and/or degradation of different pollutants and prevent the blocking of filter material.

High electrical conductivity of the nanocomposite material according to the invention enables more demanding redox reactions, which more effectively remove or decompose various pollutants, even those that are more persistent and harder to decompose. The large active specific surface area of the electrically conductive filtration material used as an electrode, which is achieved using suitable functionalization of the porous substrate with nanomaterials, enables more intense electrochemical action even when an external electric voltage of only a few volts is used.

The cell and the process for water treatment may be used in the treatment of any water polluted with at least one pollutant, including pharmaceuticals, personal hygiene products, biological compounds such as enzymes, proteins, etc., organic matter such as organic acids, alcohols, pigments, etc., aromatic compounds, pesticides, microorganisms and combinations thereof. Depending on the nature of pollutants in the processed or model water, the appropriate orientation of the electric potential on the electrically conductive and antimicrobial filtration material, as the active (working) electrode.

The invention has several advantages in comparison to the known methods, such as:
- simple handling and performance as the process occurs at room temperature and atmospheric pressure,
- clean technology as the main reagents are electrons or compounds in the cell, so there is no need for additional chemicals, their application and/or storage, and
- various procedures taking place in the cell due to the used materials for electrodes, which ensures versatility.

The present invention will be described in further detail based on exemplary embodiments, examples, and figures, which show:
- Figure 1: A schematic view of the electrochemical filtration cell according to a possible embodiment
- Figure 2: Scanning electron microscopy (SEM) image of the AgNC filter electrode material used in the cell

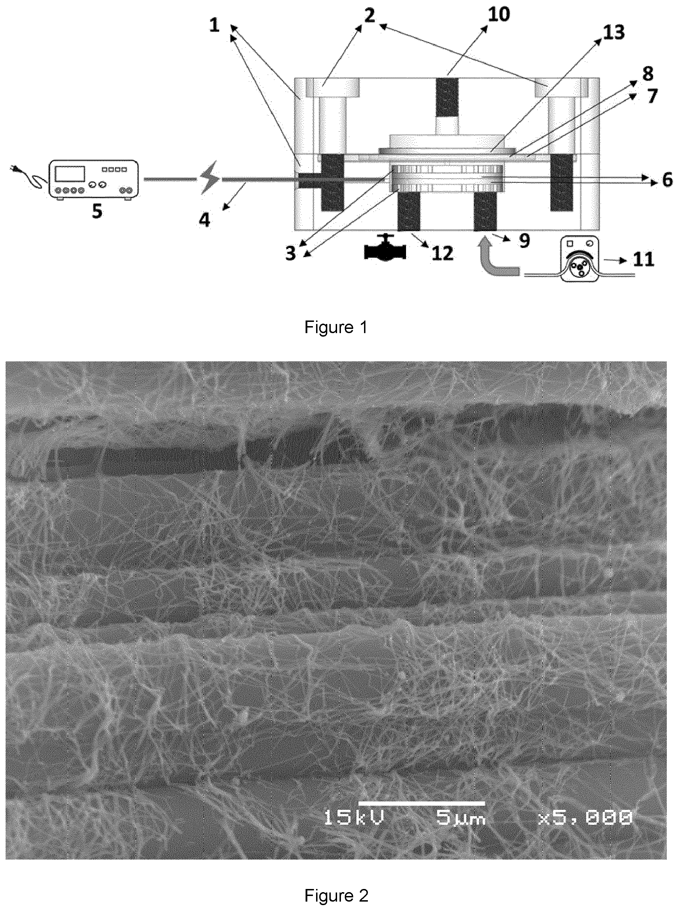

The hybrid electrochemical filtration cell as shown in figure 1 comprises:
- a two-part housing 1 made from non-conductive material acrylic glass, wherein said parts of the housing are installed and fixed together with four screws 2,
- a space inside the housing arranged to receive two electrodes,
- two electrodes 3 one functioning as an anode and the other as a cathode, said electrodes being connected with wires 4, which are connectable to an outer source of voltage 5,
- at least one distancing element 6 arranged to be placed between said electrodes to define the distance between the electrodes, wherein each distancing element is made from a non-conductive material,
- at least one suitable seal to seal 7,8 the interior of the housing and fix the active electrode,
- an inlet 9 for leading water to be treated into the interior of the housing,
- an outlet 10 for leading the treated water from the interior of the housing,
- a pump 11 for pumping water into the cell and a valve 12 for controlling flow through the cell.

At least one of the electrodes is a silver nanowire composite prepared in the following manner:
- silver nanowires (AgNWs) with a diameter of (50 ± 20) nm and lengths of (10 ± 5) µm are dispersed in ethanol (96 %) V/V) to obtain ethanol dispersion of AgNWs with mass concentration of (3 ± 1) mg/ml.
- the prepared ethanol dispersion of AgNWs is coated on porous polyamide (PA) 6.6 fabric, used as filter substrate, with a spray coating technique, to obtain silver nanocomposite (AgNC), which was left to dry in an air atmosphere at room temperature and then rinsed 5-times with distilled water at bath ration 1:100 (1 g of fabric in 100 mL of distilled water) to remove non-bonded AgNWs particles. The stability of the AgNWs coating on the surface of porous PA 6.6 fabric can be improved by annealing at 120 °C for 20 min.

The morphology of the AgNC material was analyzed with scanning electron microscopy (SEM) shown in figure 2. The image shows fiber morphology arranged on the porous support material of PA 6.6 fabric.

The specific electric surface resistivity of the AgNC, used as an electrode, was determined by the surface resistivity test fixture Keithley 8009 with Agilent 34401A Multimeter. The antimicrobial effect of the AgNC was determined according to standard American Society for Testing and Materials (ASTM) E2149-13a by comparison of uncoated and coated PA 6.6 fabric and their antimicrobial ability under dynamic contact conditions, with soaking 2x2 cm pieces in inoculated buffer solution for 1 h while shaking. The results of these analyses are shown in table 1 below.

**Table 1. Specific electric surface resistance (ohm/sq) and antimicrobial activity (% reduction) of prepared AgNC**

| | Specific electric surface resistance (Ohm/sq) | Antimicrobial effect (% reduction) | | |
|---|---|---|---|---|
| | | *Escherichia coli* | *Staphylococcus aureus* | *Candida albicans* |
| AgNC | 25 | 100 | 100 | 43 |

### Examples

The hybrid electrochemical filtration cell according to the embodiment described above was tested for its performance in removal, decomposition and disinfection of organic and microbiological pollutants from water, which was determined by UV-VIS spectroscopy, conductivity and pH measurements, use of phenol cuvette tests, atomic absorption spectrometer and/or determination of antimicrobial properties by serial dilution, plating on agarose plates, incubation and cell counting of untreated and treated water. The results of the above-mentioned analysis are shown in the following tables for each example.

### Example 1: Degradation of phenol

1L of water solution of phenol with a mass concentration of 9.87 g/L and NaCl with a mass concentration of 0.58 g/L (10 mM) was prepared. The electrochemical cell was prepared as defined in table 2 below:

**Table 2. Electrochemical filtration conditions for (example 1) degradation of phenol.**

| | Active electrode material | Counter electrode material | Distance between electrodes | Electric potential on the active electrode |
|---|---|---|---|---|
| A | AgNC | AgNC | 3.4 mm | E = 0V, +5V and -5V |
| B | AgNC | Cu | 3.4 mm | E = 0V, +5V and -5V |

Between the two electrodes, non-conductive perforated spacers 1.7 mm thick made of polyacrylic mass were inserted to adjust the distance between the electrodes to 3.4 mm. The electrochemical filtration cell was connected to a Heidolph Pumpdrive 5001 peristaltic pump and a constant flow of the solution through the cell was regulated at 3.5 mL/min. We connected the electrodes to the DC voltage source, the Tenma Bench DC Power Supply 72-8695A DC generator, an electric potential E = +5V and -5V was created between the electrodes, whereby in the first case the active electrode was the anode (A⁺) and the counter electrode was cathode (C⁻), and in the second case, the active electrode was the cathode (C⁻) and the counter electrode was the anode (A⁺), depending on the method of connection to the source of electric voltage. For comparison, we also conducted the filtration without applying the electrical potential (0V). The active surface of the active electrode is 9.6 cm² and of the counter electrode is 6.6 cm².

We determined the percentage of phenol degradation after electrochemical filtration and measured the pH values and conductivity of the input and output solutions. The phenol content in the input solutions and in the samples after electrochemical filtration under different conditions was determined with the help of Hach Lange LCK346 cuvette tests, which enable the determination of the phenol concentration in the range between 5 and 150 mg/L with a spectrophotometer DR2800^{™} VIS Portable Spectrophotometer (Hach Lange). The content analysis was performed in two parallels and the average value was calculated. As a result, the percentage reduction of the phenol content compared to the phenol content of the input solution was given. Results are given in table 3 below.

**Table 3. Degradation (%) of phenol**

| Example | Electrode | Electrode material | Electrical potential on the active electrode | Phenol concentration (mg/L) | | pH | | Conductivity (mS/cm) | | Phenol degradation (%) |
|---|---|---|---|---|---|---|---|---|---|---|
| | | | | before | after | before | after | before | after | |
| A | active | AgNC | 0V | 9.87 | 9.27 | 4.8 | 5.6 | 1.02 | 0.95 | 6.1 |
| | counter | AgNC | | | | | | | | |
| A | active | AgNC | -5V | 9.87 | 8.71 | 4.8 | 6.2 | 1.02 | 1.01 | 11.7 |
| | counter | AgNC | | | | | | | | |
| A | active | AgNC | +5V | 9.87 | 8.44 | 4.8 | 6.0 | 1.02 | 0.92 | 14.5 |
| | counter | AgNC | | | | | | | | |
| B | active | AgNC | 0V | 9.87 | 9.51 | 4.8 | 6.3 | 1.02 | 1.01 | 3.6 |
| | counter | Cu | | | | | | | | |
| B | active | AgNC | +5V | 9.87 | 9.10 | 4.8 | 6.1 | 1.02 | 1.01 | 7.8 |
| | counter | Cu | | | | | | | | |
| B | active | AgNC | -5V | 9.87 | 8.37 | 4.8 | 5.7 | 1.02 | 0.93 | 15.2 |
| | counter | Cu | | | | | | | | |

### Example 2: Degradation of methylene blue

1L of water solution of methylene blue with a mass concentration of 5 mg/L and NaCl with a mass concentration of 0.58 g/L (10 mM) or 1 g/L was prepared. The electrochemical cell was prepared as defined in table 4 below:

**Table 4. Electrochemical filtration conditions for (example 2) degradation of methylene blue.**

| | Active electrode material | Counter electrode material | Distance between electrodes | Added NaCl electrolyte | Flow | Electric potential on the active electrode |
|---|---|---|---|---|---|---|
| A | AgNC | AgNC | 5.1 mm | 0.58 g/L | 6.0 mL/min | E = +5V & -5V |
| B | AgNC | Cu | 5.1 mm | 0.58 g/L | 5.5 mL/min | E = +5V & -5V |
| C | AgNC | Cu | 5.1 mm | 1 g/L | 6.5 mL/min | E = 0V, +2.5V, +5V, -2.5V & -5V |
| D | AgNC | Cu | 3.4 mm | 1 g/L | 6.7 mL/min | E = +2.5V, +5V, -2.5V & -5V |
| E | 2-layer AgNC | Cu | 3.4 mm | 1 g/L | 3.3 mL/min | E = +0.5V, +2.5V, +5V, +10V, -0.5V, -2.5 V, -5V & -10V |
| F | 5-layer AgNC | Al | 3.4 mm | 1 g/L | 3.3 mL/min | E = 0V, +0.5V, +1V, +2.5V, +5V, +10V, -0.5V, -1V, -2.5V, -5V & -10V |

Between the two electrodes, 3 non-conductive perforated spacers with a thickness of 1.7 mm for examples A to D were inserted, while 2 were used in examples E and F to obtain desired distances. The electrochemical cell was connected to a Heidolph Pumpdrive 5001 peristaltic pump and the constant flow of the solution was regulated through the cell, set between 3.3 and 6.7 mL/min, as can be seen in table 4. We connected the electrodes to the DC voltage source, the Tenma Bench DC Power Supply 72-8695A DC generator, an electric potential between 0.5V and 10V was created between the electrodes, whereby in the case of positive potential value, stated as a condition in table 4, the active electrode was the anode (A⁺) and the counter electrode was the cathode (C⁻), and in the case of the negative value of the potential, the active electrode was the cathode (C⁻) and the counter electrode was the anode (A⁺), depending on the method of connection to the source of electric voltage. For comparison, we also conducted the filtration without applying the electrical potential (0V) for some experiments. The active surface of the active electrode is 9.6 cm² and of the counter electrode is 6.6 cm². The pH value and electrical conductivity of the input and output model waters were measured. Using UV-VIS spectrophotometer Lambda35 (PerkinElmer), we determined the degradation of methylene blue as a percentage of the input concentration. Results are shown in table 5 below.

**Table 5. Degradation (%) of methylene blue**

| Example | Electrode | Electrode material | Electric potential on the active electrode | Methylene blue concentration (mg/L) | | pH | | Conductivity (mS/cm) | | Degradation (%) |
|---|---|---|---|---|---|---|---|---|---|---|
| | | | | before | after | before | after | before | after | |
| A | active | AgNC | +5V | 5.53 | 4.68 | 4.8 | 5.7 | 1.1 | 1.1 | 15.3 |
| | counter | AgNC | | | | | | | | |
| A | active | AgNC | -5V | 5.53 | 4.79 | 4.8 | 5.3 | 1.1 | 1.1 | 13.3 |
| | counter | AgNC | | | | | | | | |
| B | active | AgNC | +5V | 5.42 | 4.21 | 5.1 | 5.7 | 1.2 | 1.1 | 22.3 |
| | counter | Cu | | | | | | | | |
| B | active | AgNC | -5V | 5.42 | 4.40 | 5.1 | 7.2 | 1.2 | 1.2 | 18.8 |
| | counter | Cu | | | | | | | | |
| C | active | AgNC | 0V | 5.44 | 4.84 | 4.6 | 5.0 | 2.1 | 2.0 | 11.1 |
| | counter | Cu | | | | | | | | |
| C | active | AgNC | +2.5V | 5.44 | 4.89 | 4.6 | 5.0 | 2.1 | 2.0 | 10.0 |
| | counter | Cu | | | | | | | | |
| C | active | AgNC | -2.5V | 5.44 | 4.59 | 4.6 | 5.6 | 2.1 | 2.0 | 15.7 |
| | counter | Cu | | | | | | | | |
| C | active | AgNC | +5V | 5.44 | 4.83 | 4.6 | 5.2 | 2.1 | 2.0 | 11.3 |
| | counter | Cu | | | | | | | | |
| C | active | AgNC | -5V | 5.44 | 4.46 | 4.6 | 5.7 | 2.1 | 2.0 | 18.1 |
| | counter | Cu | | | | | | | | |
| D | active | AgNC | +2.5V | 5.42 | 4.63 | 4.4 | 5.1 | 2.0 | 2.0 | 14.6 |
| | counter | Cu | | | | | | | | |
| D | active | AgNC | -2.5V | 5.42 | 4.74 | 4.4 | 4.8 | 2.0 | 2.0 | 12.5 |
| | counter | Cu | | | | | | | | |
| D | active | AgNC | +5V | 5.42 | 4.60 | 4.4 | 5.4 | 2.0 | 2.0 | 15.1 |
| | counter | Cu | | | | | | | | |
| D | active | AgNC | -5V | 5.42 | 4.77 | 4.4 | 4.7 | 2.0 | 2.0 | 12.0 |
| | counter | Cu | | | | | | | | |
| E | active | 2xAgNC | +0.5V | 5.34 | 4.59 | 4.5 | 4.6 | 2.0 | 2.0 | 14.0 |
| | counter | Cu | | | | | | | | |
| E | active | 2xAgNC | -0.5V | 5.34 | 4.28 | 4.5 | 4.7 | 2.0 | 2.0 | 19.8 |
| | counter | Cu | | | | | | | | |
| E | active | 2xAgNC | +2.5V | 5.34 | 4.56 | 4.5 | 5.0 | 2.0 | 2.0 | 14.6 |
| | counter | Cu | | | | | | | | |
| E | active | 2xAgNC | -2.5V | 5.34 | 4.31 | 4.5 | 5.1 | 2.0 | 2.0 | 19.4 |
| | counter | Cu | | | | | | | | |
| E | active | 2xAgNC | +5V | 5.34 | 4.64 | 4.5 | 5.0 | 2.0 | 2.0 | 13.0 |
| | counter | Cu | | | | | | | | |
| E | active | 2xAgNC | -5V | 5.34 | 4.34 | 4.5 | 4.9 | 2.0 | 2.0 | 18.7 |
| | counter | Cu | | | | | | | | |
| E | active | 2xAgNC | +10V | 5.34 | 4.70 | 4.5 | 4.7 | 2.0 | 2.0 | 12.1 |
| | counter | Cu | | | | | | | | |
| E | active | 2xAgNC | -10V | 5.34 | 4.40 | 4.5 | 4.8 | 2.0 | 2.0 | 17.7 |
| | counter | Cu | | | | | | | | |
| F | active | 5xAgNC | 0V | 5.11 | 4.77 | 6.2 | 6.8 | 2.0 | 2.0 | 6.5 |
| | counter | Al | | | | | | | | |
| F | active | 5xAgNC | +0.5V | 5.11 | 4.75 | 6.2 | 7.3 | 2.0 | 2.0 | 6.9 |
| | counter | Al | | | | | | | | |
| F | active | 5xAgNC | -0.5V | 5.11 | 3.44 | 6.2 | 6.0 | 2.0 | 2.0 | 30.7 |
| | counter | Al | | | | | | | | |
| F | active | 5xAgNC | +1.0V | 5.11 | 4.55 | 6.2 | 7.5 | 2.0 | 2.0 | 10.8 |
| | counter | Al | | | | | | | | |
| F | active | 5xAgNC | -1.0V | 5.11 | 3.86 | 6.2 | 6.9 | 2.0 | 2.0 | 24.5 |
| | counter | Al | | | | | | | | |
| F | active | 5xAgNC | +2.5V | 5.11 | 4.44 | 6.2 | 8.4 | 2.0 | 2.0 | 13.0 |
| | counter | Al | | | | | | | | |
| F | active | 5xAgNC | -2.5V | 5,11 | 3,39 | 6,2 | 8,0 | 2,0 | 2,0 | 33,7 |
| | counter | Al | | | | | | | | |
| F | active | 5xAgNC | +5V | 5,11 | 4,15 | 6,2 | 9,2 | 2,0 | 1,9 | 18,7 |
| | counter | Al | | | | | | | | |
| F | active | 5xAgNC | -5V | 5,11 | 2,93 | 6,2 | 8,3 | 2,0 | 2,0 | 42,7 |
| | counter | Al | | | | | | | | |

### Example 3: Disinfection of waters contaminated with microorganisms

A laboratory strain of *Escherichia coli* (*E. coli*) was incubated for 20 hours in LB medium at 37 °C. After incubation, with the help of UV-VIS spectroscopy on Lambda35 (PerkinElmer) at a wavelength of 600 nm, the value of the optical density (OD₆₀₀) of the *E. coli* culture was measured at 1.63. 1 mL of the prepared culture was added to 999 mL of sterilized water so that the final content of Escherichia coli bacteria in the model water for the electrochemical filtration experiment was 1.63·10⁶ CFU/mL.

A laboratory strain of *Bacillus subtilis* (*B. subtilis*) was incubated for 20 hours in LB medium at 35 °C. After incubation, with the help of UV-VIS spectroscopy on Lambda35 (PerkinElmer) at a wavelength of 600 nm, the value of the optical density (OD₆₀₀) of the *B*. *subtilis* culture was measured at 1.42. 1 mL of the prepared culture was added to 999 mL of sterilized water so that the final content of Escherichia coli bacteria in the model water for the electrochemical filtration experiment was 1.42·10⁶ CFU/mL.

NaCl electrolyte with a concentration of 1 g/L was added to each model water. During the experiment, the model water was stored in an insulating container with ice to prevent the growth of microorganisms during the experiment, which takes place for several hours at room temperature.

For each tested bacterial strain, the electrochemical filtration cell was equipped with a counter aluminium (Al) electrode and an active 3-layer AgNC electrode. Between the two electrodes, 3 non-conductive perforated spacers with a thickness of 1.7 mm were inserted to regulate the distance between the electrodes of 5.1 mm. The electrochemical cell was connected to a Heidolph Pumpdrive 5001 peristaltic pump and a constant flow of the solution through the cell was regulated at 3.3 mL/min. The electrodes were connected to a DC voltage source and an electric potential of E = 0V, -2.5V and -5V was generated on the AgNC electrode with a Tenma Bench DC Power Supply 72-8695A DC generator. For the determination of the antimicrobial properties of AgNC itself, a test was conducted without applying electrical potential, while as a control experiment, electrochemical filtration without the AgNC electrode and without the electrical potential was performed. The analysis sample for each set of the experiment was taken after 30 min of electrochemical filtration. 100 µL of the sample or its aliquot from the model water before and after filtration was added to the agar media and evenly distributed over the surface. The effect of disinfection was determined according to the standard plating method, which takes place by inoculating the agar medium with the test organism, incubating the inoculated medium at a temperature of 37 °C for 20 h for *E. coli* and at a temperature of 35 °C for 24 h for *B. subtilis,* and then counting the colonies of the test organism on the agar medium. The effect of disinfection was calculated and given as a percentage (%) of reduction. The results are shown in table 6 below.

**Table 6. Disinfection effect (% reduction) for model water contaminated with E. coli and B. subtilis, respectively.**

| Bacterial strain | Active electrode material | Electrode potential on the active electrode | CFU counted on an agar plate (for 100 µL) | CFU/ml (F_{red} = 100; Vₚₗₐₜ = 0,1 mL) | Reduction (%) |
|---|---|---|---|---|---|
| *E. coli* | None (control) | - | 1594 | 1.5940 · 10⁶ | - |
| | 3xAgNC | 0V | 1317 | 1.3170 · 10⁶ | 17.4 |
| | 3xAgNC | -2.5V | 376 | 0.3760 · 10⁶ | 76.4 |
| | 3xAgNC | -5.0V | 429 | 0.4290 · 10⁶ | 73.1 |
| *B. subtilis* | None (control) | - | 526 | 0.13150 · 10⁶ | - |
| | 3xAgNC | 0V | 337 | 0.08425 · 10⁶ | 35.9 |
| | 3xAgNC | -2.5V | 55 | 0.01375 · 10⁶ | 89.5 |
| | 3xAgNC | -5.0V | 83 | 0.02075 · 10⁶ | 84.2 |

## Claims

1. A hybrid electrochemical filtration cell for water treatment **characterized in that** the hybrid electrochemical filtration cell comprises:
- a two-part housing made from a non-conductive material, wherein said parts of the housing are installed and fixed together with fixation means,
- a space inside the housing arranged to receive:
∘ two electrodes, one functioning as an anode and the other as a cathode, said electrodes being connected with wires, which are connectable to an outer source of voltage,
∘ at least one distancing element arranged to be placed between said electrodes to define the distance between the electrodes and to prevent short circuits, wherein each distancing element is made from a non-conductive material,
- at least one suitable seal to seal the interior of the housing,
- an inlet for leading water to be treated into the interior of the housing,
- an outlet for leading the treated water from the interior of the housing,
- a pump for pumping water into the cell
wherein at least one electrode made from an antimicrobial nanocomposite porous material, which comprises a porous substrate with a coating made of antimicrobial and electrically conducting nanomaterial.

2. The hybrid electrochemical filtration cell for water treatment according to claim 1, wherein the porous substrate is selected in the group comprising synthetic or natural polymeric or ceramic flat porous substrate materials.

3. The hybrid electrochemical filtration cell for water treatment according to any of the preceding claims, wherein the antimicrobial and electrically conductive layer is provided as a thin layer or a filler.

4. The hybrid electrochemical filtration cell for water treatment according to any of the preceding claims, wherein the antimicrobial and electrically conductive layer comprises metal, metal-oxides, doped metal-oxides, organic polymers, doped organic polymers, and/or carbon-based nanomaterials.

5. The hybrid electrochemical filtration cell for water treatment according to the preceding claim, wherein the antimicrobial and electrically conductive layer may be selected in the group comprising: silver, copper, gold, zinc oxide, indium tin oxide, polyaniline, polypyrrole, polyacetylene, carbon nanotubes, graphene, or combinations thereof.

6. The hybrid electrochemical filtration cell for water treatment according to any of the preceding claims, wherein the antimicrobial and electrically conductive layer comprises one-dimensional nanomaterials such as rods, tubes or wires, or two-dimensional nanomaterials such as plates.

7. The hybrid electrochemical filtration cell for water treatment according to any of the preceding claims, wherein the antimicrobial and electrically conductive layer is applied to the porous material using spray coating, spin coating, dip coating, vacuum filtration or any other suitable method for coating or incorporation of nanomaterials on or into the substrate to prepare nanocomposites.

8. The hybrid electrochemical filtration cell for water treatment according to any of the preceding claims, wherein nanomaterials in the nanocomposite are present in an amount from 5 to 60 wt. % of the prepared nanocomposite, while for coated nanomaterials 0.1 - 2 µg of nanomaterial cover 1 cm² of the chosen substrate.

9. The hybrid electrochemical filtration cell for water treatment according to any of the preceding claims, wherein the nanocomposite material comprises silver nanowires and porous polyamide 6.6 fabric.

10. The hybrid electrochemical filtration cell for water treatment according to claim 9, wherein the nanocomposite material is prepared in the following manner:
- silver nanowires (AgNWs) with a diameter of (50 ± 20) nm and lengths of (10 ± 5) µm are dispersed in ethanol (96 %) V/V) to obtain ethanol dispersion of AgNWs with mass concentration of (3 ± 1) mg/ml,
- the ethanol dispersion of AgNWs prepared in the previous step is coated on porous polyamide (PA) 6.6 fabric, used as a filter substrate, with a spray coating technique, to obtain silver nanocomposite (AgNC), which was left to dry in an air atmosphere at room temperature and then rinsed 5-times with distilled water at bath ration 1:100 (1 g of fabric in 100 mL of distilled water) to remove non-bonded AgNWs particles, and
- Optional annealing at 120 °C for 20 min.

11. The hybrid electrochemical filtration cell for water treatment according to any of the preceding claims, wherein the second, i.e., the counter electrode is any suitable electrically conductive material, such as nanocomposite material as defined in claim 9 or 10, or silver (Ag), copper (Cu), aluminium (Al).

12. The hybrid electrochemical filtration cell for water treatment according to any of the preceding claims, wherein the distance between both electrodes is up to 9.0 mm, preferably 3.4 or 5.1 mm, and is set with at least one spacer, wherein the spacer is made from a perforated non-conductive material, preferably acrylic glass, acrylonitrile butadiene styrene (ABS), polylactic acid (PLA) or polyethylene terephthalate glycol (PETG), and wherein perforation is in the range from 25 to 70% of the spacer surface.

13. The hybrid electrochemical filtration cell for water treatment according to any of the preceding claims, wherein the cell is provided with a connected reservoir for the water to be treated, which is connected to the inlet of the cell and/or a second reservoir for the treated water connected to the outlet of the cell, and at least one valve for controlling flow through the cell.

14. A process for water treatment using the cell according to any of the preceding claims comprises the following steps:
- analysis of the water to be treated to determine the pollutants to be removed or degraded,
- preparation of the nanocomposite material to be used as at least one electrode,
- selecting the material for the counter electrode and choosing process parameters, i.e. anode, cathode, E, time of treatment, and similar, wherein conditions are the following: outer electric voltage (*U*) is in the range from -10 V to +10 V, temperature (*T*) 20 - 25 °C, water flow (*Q*) from 1 mL/min to 100 ml/min and conductivity of the medium of at least 500 µS/cm,
- assembling the cell and connecting the inlet with a suitable water source either in a cross-flow setting or a dead-end setting,
- connecting the electrodes with an external voltage source,
- treatment of the water for a specified time or amount of water.

15. Use of the cell and/or the process for water treatment according to any of the preceding claims in treatment of any water polluted with at least one pollutant, including pharmaceuticals, personal hygiene products, biological compounds such as enzymes, proteins, etc., organic matter such as organic acids, alcohols, pigments, etc., aromatic compounds, pesticides, microorganisms and combinations thereof.
